# EUROPEAN PATENT APPLICATION

(11) **EP 1 101 670 A2**
(43) Date of publication of application: **23.05.2001**
(21) Application number: 00204047.5
(22) Date of filing: 17.11.2000
(51) Int. Cl.: B60R 25/00, E05B 49/00

(54) **Intelligent valet key**

(30) Priority: 18.11.1999 US 166400 P
(71) Applicant: Siemens Automotive Corporation, Auburn Hills, Michigan 48326-2980 (US)
(72) Inventor: Losey, Allen D., Ortonville, Michigan 48462 (US); Johnson, Susan, Rochester, Michigan 48306 (US)
(74) Representative: Humphrey-Evans, Edward John

(57) **Abstract**

A vehicle access system includes a signaling device that provides an authorization signal from the user. The system controller performs a plurality of functions provided that a proper or valid authorization code is received from the signaling device. The system operates in a second mode where a reduced number of vehicle access functions are permitted. The second mode of operation is referred to as a valet mode. The invention includes a variety of ways to set the system to work in a variety of valet modes whenever control of the vehicle is surrendered to a valet parking attendant or mechanic, for example. More than one level of authorization and access is possible with a system designed according to this invention.

## Description

This invention generally relates to vehicle entry and control systems and, more particularly, to a system including a passive signaling device, which can operate in a valet or reduced access mode.

Traditionally, access to vehicles including entry and operation have required a mechanical key inserted into a mechanical lock to open a door or turn on the ignition, for example. In some situations, two different mechanical keys were provided so that a vehicle owner could restrict access to the vehicle storage compartments, for example, while still permitting another person to drive the vehicle.

More recently, keyless entry systems have become popular. Keyless vehicle access systems typically include a remote signaling device that requires a user to activate at least one manual switch. These switches are typically incorporated onto a key fob. By activating the appropriate switch, various functions such as unlocking the vehicle doors or trunk or remotely turning on the ignition of the vehicle are possible provided that the individual with the signaling device is within a chosen range of the vehicle.

A more recently proposed system includes a passive remote signaling device such as a card that is carried by a vehicle owner. The system controller on a vehicle receives signals from the passive signaling device without requiring any manual activation by the user. The signal from the passive signaling device may provide access to the vehicle or enable operation of the vehicle ignition, for example.

Those skilled in the art are always striving to make improvements to vehicle access systems. With the incorporation of the added convenience of keyless systems, additional challenges and problems are presented. This invention provides an enhanced vehicle access system that utilizes a variety of modes of operation to utilize signals from at least one signaling device. Further, this invention provides specific control features to address the situation where a valet or technician is provided access to the vehicle.

In general terms, this invention is a vehicle access system that includes a signaling device that provides an authorization signal. A controller controls access to various portions of the vehicle responsive to a proper authorization signal. The controller permits access to a plurality of vehicle features in a first mode of operation when the controller confirms a first level of authorization. The controller also operates in a second mode responsive to a second level authorization signal where a reduced number of vehicle features are available. The second mode of operation is particularly useful when the vehicle is entrusted to a valet or service technician.

In one example access to the vehicle storage compartments is denied in the second mode of operation. In another example the engine operation is limited in the second mode of operation so that the vehicle cannot be driven above a selected speed. This invention includes a variety of ways to program the controller to provide a variety of levels of access and a variety of vehicle function control parameters within the various levels.

The various features and advantages of this invention will become apparent to those skilled in the art from the following detailed description of the currently preferred embodiments. The drawing that accompanies the detailed description can be briefly described as follows.

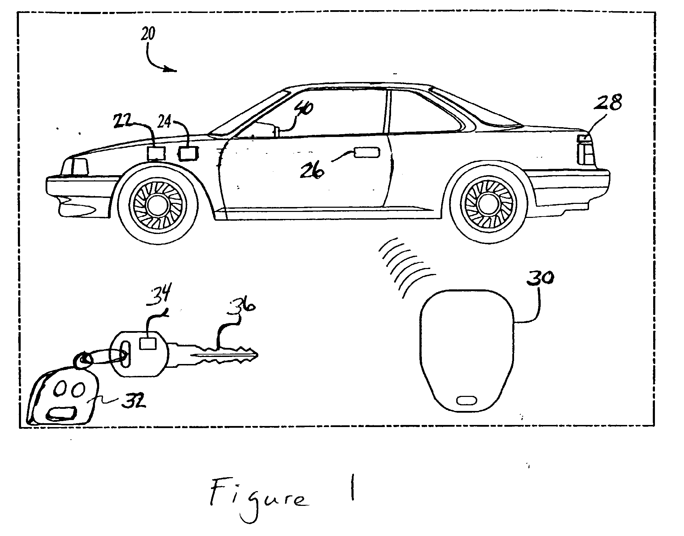

Figure 1 schematically illustrates a system designed according to this invention.

A vehicle access system 20 designed accordingto this invention, includes a controller 22. A variety of vehicle access functions preferably do not operate without appropriate command signals from the controller 22. Example vehicle access functions include operating an engine controller 24, which preferably controls an ignition kill switch, engine operation and other engine performance variables. A door lock 26 preferably is useable only responsive to appropriate commands from the controller 22. Similarly, a trunk lock 28 preferably operates responsive to the controller 22.

The controller 22 preferably operates responsive to an appropriate authorization code or signal from a signaling device. A variety of signaling devices are useable within the scope of this invention. One example is a passive signaling device 30, which does not require any manual activation by the user. In one example, the passive signaling device 30 is a card that is carried by the vehicle owner or user. Provided that the passive signaling device 30 is within a specified range of the controller 22, signals are exchanged between the passive device 30 and the controller 22 in a passive fashion.

Another example signaling device useable with this invention is a key fob 32. Key fobs, as known in the art, have one or more switches that are activateable by a user to indicate a desired vehicle access function, such as turning on the vehicle ignition or opening vehicle locks. Another signaling device within the scope of this invention is a transmitter 34 supported on a key in a manner known in the art. The transmitter 34 preferably operates in one of two possible modes. In one mode, the transmitter 34 transmits signals to the controller 22 from a remote location. In one example, the transmitter 34 is a passive signaling device. In another example, the transmitter 34 operates responsive to a switch activated by a user. In still another example, the transmitter 34 only communicates with the controller 22 when the key body 36 is received in an appropriate lock on the vehicle.

The controller 22 preferably operates in a variety of modes depending upon an authorization code or signal received from one or more of the signaling devices that are useful with this invention. The controller 22 preferably operates in a first mode that provides full access to all vehicle functions. A first authorization code provides a signal to the controller 22 that the user intends to have full access to all vehicle functions.

For vehicle security purposes, the controller 22 preferably also operates in a plurality of other modes. A first one of these modes may be referred to as a valet mode where the controller 22 permits access to the vehicle door locks 30 and the ignition of the engine, for example. In the valet mode, however, access to the vehicle trunk lock 28 may be denied so that the vehicle owner's valuables stored in the truck are not accessible to the valet.

Another mode of operation may include further limitations on access to the vehicle. One example further limitation is to control the engine performance whenever a specific authorization code is received. For example, when entrusting the vehicle to a valet, the engine rotations rotations per minute may be limited to a specific number so that the valet does not drive the vehicle above a certain speed.

The controller 24 preferably is programmable by a vehicle owner to customize the various levels of security at which the controller 22 operates responsive to the different authorization codes. In this way, a system designed according to this invention allows a vehicle owner to customize various levels of security for various individuals to whom the vehicle is entrusted. For example, a valet mode may be set by the factory while a third level of security may be set by the vehicle owner so that a young driver, such as a teenage child, may be provided with limited access to some of the vehicle functions or to have limited vehicle engine performance.

A system designed according to this invention preferably includes an interface 40, which is schematically illustrated within the vehicle for purposes of illustration, that allows the vehicle owner to customize the various levels of security or modes of operation for the controller 24. A variety of interfaces may be used to provide customization or programming of the controller 22 by the vehicle owner. The interface 40 may also be used, for example, to set the controller 22 into the various modes of operation.

It is preferred to have a variety of authorization codes so that the controller 22 determines which level of security in which to operate at a given time. Different authorization codes may be provided by different signaling devices. Alternatively, one signaling device preferably has the ability to be set to provide more then one authorization code. In the latter example, the vehicle owner is provided with the ability to set the signaling device to provide the desired authorization code to the controller 22 whenever control of the vehicle is surrendered to another person.

Given this description, those skilled in the art will realize that a variety of combinations of the features disclosed in this specification are possible to provide limited access to a valet or mechanic where a vehicle includes an electronic key arrangement. Given this description, those skilled in the art will be able to choose from among commercially available electronic components or to suitably program a controller to perform the functions described in this specification.

The preceding description is exemplary rather than limiting in nature. Variations and modifications to the disclosed embodiments may become apparent to those skilled in the art that do not necessarily depart from the purview of this invention.

## Claims

1. A vehicle access system, comprising:
a signaling device that provides an authorization code; and
a controller that performs vehicle access functions, the controller operating in a first mode where a plurality of access functions are available when a first authorization code is received, the controller operating in a second mode where a reduced number of access functions are available when a second authorization code is received.

2. The system of claim 1, including a second signaling device and wherein the controller operates in the first mode responsive to receiving the authorization code from the signaling device and in the second mode when the authorization code is received from the second signaling device.

3. The system of claim 1, wherein the signaling device is passive and does not require any manual activation by a user.

4. The system of claim 1, wherein the second mode is a valet mode that includes denying access to vehicle storage compartments.

5. The system of claim 1, including a control element that is selectively operated to cause the controller to operate in only the second mode.

6. The system of claim 5, including a mechanical lock supported on the vehicle for locking the controller into operating in only the second mode and a mechanical key to operate the lock.

7. The system of claim 5, wherein the control element includes at least one switch that is operable to set the controller to operate in only the second mode.

8. The system of claim 1, wherein the controller operates in a third mode having a different number of access functions responsive to a third authorization code.

9. The system of claim 1, wherein the second mode includes a limited engineer performance capability.

10. The system of claim 1, wherein the controller is programmable by a vehicle owner such that the vehicle owner selects the features that are available when the controller operates in the second mode.
